# FASCICULE DE BREVET EUROPEEN

(11) **EP 3 830 042 B1**
(45) Date de publication et mention de la délivrance du brevet: **15.10.2025**
(21) Numéro de dépôt: 19744721.2
(22) Date de dépôt: 26.07.2019
(51) Int. Cl.: C03B 5/42, F27D 21/00, B28B 7/16

(54) **PROCÉDÉ DE FABRICATION D'UN FOUR DE VERRERIE AVEC DÉTECTEUR D'USURE**
VERFAHREN ZUR HERSTELLUNG EINES GLASSCHMELZOFENS MIT EINEM VERSCHLEISSDETEKTOR
PROCESS FOR MANUFACTURING A GLASS FURNACE HAVING A WEAR DETECTOR

(30) Priorité: 01.08.2018 FR 1857214
(43) Date de publication de la demande: 09.06.2021
(73) Titulaire: SAINT-GOBAIN CENTRE DE RECHERCHES ET D'ETUDES EUROPEEN, 92400 Courbevoie (FR)
(72) Inventeur: CABODI, Isabelle, 84300 CAVAILLON (FR); CITTI, Olivier, 84306 CAVAILLON CEDEX (FR); VUILLERMET, Jean-Gaël, 84306 CAVAILLON CEDEX (FR)
(74) Mandataire: Ipsilon
(86) Numéro de dépôt international: PCT/EP2019/070233
(87) Numéro de publication internationale: WO 2020/025493

(56) Documents cités:
- GB-A- 2 340 226
- US-A1- 2011 144 790

## Description

### Domaine technique

L'invention concerne un procédé de fabrication d'un four de verrerie comportant :
- une partie réfractaire définissant une face chaude, et
- un détecteur d'usure de la face chaude de cette partie réfractaire.

### Etat de la technique

Un four de verrerie comporte une cuve de fusion dans laquelle les matières premières sont fondues de manière à obtenir un bain de verre en fusion. La cuve comporte classiquement une sole, sensiblement horizontale, et une paroi latérale constituée par un assemblage de blocs réfractaires. En service, cette sole et ces blocs, désignés de manière générique par « parties réfractaires », sont soumis à des conditions extrêmes, et en particulier à un environnement corrosif et abrasif qui provoque leur usure progressive.

Dans les régions en contact avec du verre en fusion notamment, l'état d'usure ne peut pas être évalué visuellement. Pour mesurer l'épaisseur résiduelle d'un bloc réfractaire, c'est-à-dire la distance entre sa face chaude et sa face froide, opposée à la face chaude, on utilise donc classiquement, au niveau de la ligne de flottaison, un crochet. Cette méthode présente l'inconvénient de nécessiter un démontage puis un remontage partiel du four et de ne fournir qu'une mesure ponctuelle. Plus récemment, WO2015147827 cite un appareil qui envoie des ondes, et en particulier des ondes radar, à travers le bloc. Les ondes réfléchies sont analysées quand cela est possible. En pratique, cette procédure est longue à mettre en œuvre et ne permet pas un suivi en temps réel.

US2011144790A1 décrit un four de verrerie et un dispositif de mesure de la température. GB2340226 décrit l'utilisation, dans un four métallurgique, d'un faisceau de fibres optiques pour mesurer l'usure.

Par ailleurs, à ce jour, il n'existe pas de moyens pour mesurer l'épaisseur résiduelle d'une sole.

Il existe donc un besoin pour une solution permettant d'évaluer, pour toutes les zones du four, de manière continue, l'épaisseur résiduelle d'une partie réfractaire d'un four de verrerie.

Un but de l'invention est de répondre, à ce besoin.

### Résumé de l'invention

Selon l'invention, on atteint ce but au moyen d'un procédé de fabrication d'un four de verrerie selon la revendication 1.

Comme on le verra plus en détail dans la suite de la description, le capteur est soumis à une température qui dépend de l'environnement de la partie réfractaire, mais également de l'épaisseur de matière qui le sépare de cet environnement. Lorsque cette épaisseur diminue, le capteur peut modifier sa réaction à la réception du signal d'interrogation. Par exemple, il cesse de fonctionner si la température est trop élevée ou il modifie le signal de réponse. Cette réaction permet à l'interrogateur d'être ainsi informé d'une réduction de l'épaisseur de la partie réfractaire.

Un four de verrerie fabriqué selon l'invention peut encore comporter une ou plusieurs des caractéristiques optionnelles suivantes :
- la partie de mesure et l'interrogateur mesurent une ou plusieurs températures le long de la partie de mesure, ce qui permet d'évaluer localement l'usure de la partie réfractaire ;
- le guide d'ondes est une fibre optique, de préférence en verre ou en saphir ;
- le guide d'ondes présente un diamètre inférieur à 200 micromètres ;
- la partie réfractaire est un bloc réfractaire ou une sole ;
- le capteur est un réseau de Bragg ;
- la partie de mesure du guide d'ondes comporte plusieurs dits capteurs, de préférence, plus de cinq, plus de huit, plus de dix, de préférence plus de vingt capteurs ;
- les capteurs sont disposés à intervalle régulier le long du guide d'ondes ;
- le guide d'ondes débouche sur une face froide de la partie réfractaire, opposée à la face chaude ;
- le guide d'ondes présente la forme générale d'une fibre, dont la partie de mesure est de préférence sensiblement rectiligne et/ou s'étend selon la direction de l'épaisseur de la partie réfractaire.

Dans un mode de réalisation, le four peut comporter une ou plusieurs des caractéristiques optionnelles suivantes :
- la partie de mesure du guide d'ondes est orientée vers une face chaude de la partie réfractaire exposée à un espace du four contenant du verre en fusion (la direction d'orientation ne formant pas nécessairement un angle de 90° avec la face chaude) ;
- la partie de mesure du guide d'ondes est orientée, au moins partiellement, voire complètement, perpendiculairement à la face chaude.

Dans un autre mode de réalisation, le four peut comporter une ou plusieurs des caractéristiques optionnelles suivantes :
- la partie de mesure du guide d'ondes s'étend, au moins partiellement, voire complètement, parallèlement à la face chaude ;
- la partie de mesure du guide d'ondes comporte un revêtement antiadhésif, par exemple de nitrure de bore ou de graphite ou à base de polymère (par exemple teflon, silicone) ;
- le four comporte une nappe constituée d'un ensemble de parties de mesure de dits guides d'ondes s'étendant suivant une surface courbe ou plane, de préférence plane, de préférence suivant un plan parallèle à la face chaude ;
- la nappe est disposée dans la partie réfractaire ;
- les parties de mesure de ladite nappe sont écartées les unes des autres d'une distance supérieure à 1 cm, supérieure à 5 cm, supérieure à 10 cm, supérieure à 20 cm, et/ou inférieure à 100 cm, inférieure à 80 cm, ou inférieure à 50 cm ;
- lesdites parties de mesure de la nappe s'étendent parallèlement les unes aux autres ou se croisent ;
- à au moins une partie des croisements entre des parties de mesure, des capteurs sont disposés sur chaque partie de mesure ;
- de préférence, à plus de 50%, de préférence plus de 80% des croisements entre des parties de mesure, chaque partie de mesure présente un capteur ;
- aux dits croisements, toutes les parties de mesure sont en contact les unes avec les autres ;
- le nombre de parties de mesure se croisant en un point de croisement est supérieur à 2, voire supérieur à 3 ou supérieur à 5 ;
- les capteurs de la nappe sont répartis suivant un motif, de préférence suivant un motif régulier, de préférence pour former un maillage de mailles carrées ou rectangulaires ;
- le four comporte plus de 1, plus de 2, de préférence plus de 3, de préférence plus de 5 dites nappes, lesdites nappes étant de préférence parallèles les unes aux autres, de préférence parallèles à la face chaude, et de préférence régulièrement écartées suivant une direction perpendiculaire à la face chaude, la distance entre deux nappes successives étant de préférence inférieure à 10 cm, 5 cm, ou 2 cm ;
- chaque nappe est disposée dans la partie réfractaire ;
- les capteurs d'au moins une première nappe sont répartis suivant un premier motif, les capteurs d'au moins une deuxième nappe sont répartis suivant un deuxième motif et, de préférence, le premier motif et le deuxième motif sont identiques, et, de préférence encore superposés l'un à l'autre suivant une direction perpendiculaire à la face chaude de la partie réfractaire ;
- le four comporte un groupe d'au moins 2, de préférence au moins 3, au moins 5 capteurs, disposés dans la partie réfractaire et superposés suivant une direction de superposition qui n'est pas parallèle à la face chaude de la partie réfractaire et, de préférence, qui est perpendiculaire à la face chaude de la partie réfractaire ;
- le four comporte plus de 5, plus de 10, plus de 50, de préférence plus de 80 dits groupes par m² de la face chaude, un capteur n'appartenant qu'à un seul groupe, les directions de superposition étant de préférence parallèles les unes aux autres.

Le liant peut être par exemple un liant hydraulique comme un ciment.

On décrit également un procédé de mesure de l'usure d'une partie réfractaire d'un four de verrerie fabriqué selon l'invention, ledit procédé comportant les étapes suivantes :
a. fabrication d'un four de verrerie selon l'invention ;
b. commande de l'interrogateur de manière qu'il injecte un signal d'interrogation dans l'entrée du guide d'ondes et, si le capteur est opérationnel, reçoive un signal de signal de réponse par le capteur ;
c. analyse du signal de réponse de manière à déterminer une information relative à l'usure de la partie réfractaire dans la région du capteur.

L'analyse peut en particulier consister à déterminer si un capteur identifié renvoie un signal d'interrogation et, si ce n'est pas le cas, c'est-à-dire en situation de défaillance du capteur, de déterminer un niveau d'usure locale de la partie réfractaire.

De préférence, plusieurs capteurs, appartenant à un ou plusieurs guides d'ondes, sont superposés dans l'épaisseur de la partie réfractaire. L'analyse permet ainsi avantageusement une détection de différents niveaux d'usure.

### Brève description des figures

D'autres caractéristiques et avantages de l'invention apparaîtront encore à la lecture de la description détaillée qui va suivre et à l'examen du dessin annexé dans lequel :
- la figure 1 représente schématiquement un mode de réalisation d'un bloc d'un four fabriqué selon l'invention, le bloc étant représenté en perspective ;
- la figure 2 (2a-2b) illustre le fonctionnement du bloc de la figure 1, dans un mode de réalisation préféré ;
- la figure 3 (3a-3d) illustre différents signaux utilisés dans un four fabriqué selon l'invention ;
- la figure 4 illustre, vue de dessus, une sole d'un four de verrerie fabriqué selon l'invention ;
- les figures 5 à 7 illustrent différents agencements de fibres optiques dans la sole de la figure 4.

Dans les différentes figures, des références identiques sont utilisées pour désigner des organes identiques ou analogues.

### Définitions

Par « partie réfractaire », on entend un élément du four en un matériau réfractaire. Une partie réfractaire peut être un bloc, mais aussi un assemblage de blocs, par exemple une paroi latérale d'une cuve, ou une sole, notamment formée par coulage. Une partie réfractaire est classiquement en un matériau fondu ou en un matériau fritté.

Classiquement, « l'épaisseur » d'une partie réfractaire d'un four de verrerie est sa dimension mesurée selon une direction perpendiculaire à sa face chaude. Par exemple, pour un bloc latéral de cuve en contact avec du verre en fusion, l'épaisseur est mesurée suivant une direction sensiblement horizontale dirigée vers le bain de verre en fusion. Pour une sole, l'épaisseur est mesurée suivant une direction verticale.

La « face chaude » est la face d'une partie réfractaire qui est exposée à un espace du four contenant, en service, du verre en fusion ou destinée à contenir du verre en fusion. La face chaude peut être en contact, ou destiné à être en contact avec du verre en fusion et/ou avec l'environnement gazeux qui s'étend au-dessus du verre en fusion. La face chaude est ainsi la face de la partie réfractaire qui est soumise ou est destinée à être soumise aux températures les plus élevées. L'ensemble des faces chaudes des blocs de la paroi latérale de la cuve de fusion de verre peut également, par extension, être qualifiée de « face chaude ». La surface supérieure de la sole peut aussi être qualifiée de « face chaude ».

L'adjectif « chaud » est utilisé à des fins de clarté. Avant que le four ne soit en service, la face « chaude » est la face qui est destinée à être soumise aux températures les plus élevées après la mise en service.

Sauf indication contraire, la « profondeur » est mesurée perpendiculairement à la face chaude, vers l'intérieur de la partie réfractaire.

Par « guide d'ondes », on entend tout moyen, différent de la partie réfractaire, pour guider une onde électromagnétique, et notamment une onde dans les fréquences du visible.

Pour évaluer si deux parties de mesure se croisent, on observe ces parties de mesure perpendiculairement à la face chaude.

« Comporter », « présenter » ou « comprendre » doivent être interprétés de manière large, non limitative.

### Description détaillée

### Guide d'ondes à l'intérieur d'un bloc

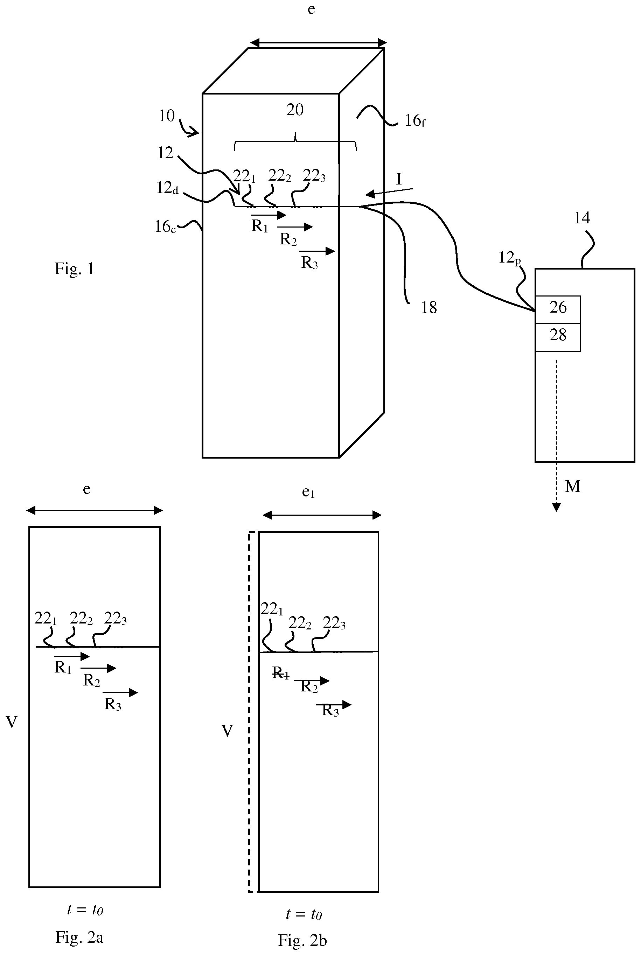

Comme représenté sur la figure 1, un four fabriqué selon l'invention comporte une partie réfractaire de four, en l'occurrence un bloc réfractaire 10, un guide d'ondes, en l'occurrence une fibre optique 12, et un interrogateur 14.

Le bloc réfractaire peut être un bloc latéral d'une cuve de four de verrerie, mais l'invention n'est pas limitée à un tel bloc latéral.

La forme du bloc n'est pas limitative. Dans le mode de réalisation représenté, il présente une forme générale parallélépipédique rectangle et définit une grande face chaude 16_{c} et une grande face froide 16_{f}, opposée à la face chaude 16_{c}. On appelle épaisseur « *e »* la distance entre la face chaude et la face froide.

Le bloc réfractaire est de préférence en un matériau résistant à des températures supérieures à 500°C, voire 600°C, voire 1000°C.

Tout bloc réfractaire utilisé dans les fours de verrerie conventionnels peut être utilisé. En particulier, chaque bloc réfractaire peut être en un matériau fondu.

Un bloc réfractaire peut être constitué, pour plus de 90% de sa masse, d'un ou plusieurs oxydes choisis dans le groupe constitué par ZrO₂, Al₂O₃, SiO₂, Cr₂O₃, Y₂O₃, et CeO₂. Il comporte de préférence plus de 90% de ZrO₂, Al₂O₃ et SiO₂. Dans un mode de réalisation, le bloc présente plus de 15% de ZrO₂, de préférence entre 26 et 95% de ZrO₂. Sa composition est typiquement, pour un total de plus de 90%, de préférence plus de 95% : 26 à 40% ZrO₂ ; 40 à 60% Al₂O₃ ; 5 à 35% SiO₂. La phase vitreuse représente environ 5 à 50%, de préférence entre 10 et 40%. De préférence, cette phase vitreuse est une phase silicatée dont la proportion massique de Na₂O est inférieure à 20% de préférence inférieure à 10% et/ou dont la proportion massique d'Al₂O₃ est inférieure à 30%.

Tous les pourcentages sont classiquement en masse sur la base des oxydes. De préférence, les oxydes représentent plus de 90%, de préférence plus de 95%, de préférence plus de 98% de la masse du bloc réfractaire.

La fibre optique 12 est de préférence en verre ou en saphir. Avantageusement, si la corrosion du bloc 10 conduit à exposer la fibre optique vers l'intérieur de la cuve, l'attaque d'une fibre optique en verre ne conduit pas à une contamination du verre en fusion. Une fibre optique en saphir est bien adaptée aux régions à haute température.

La fibre optique présente de préférence un diamètre inférieur à 200 µm, de préférence inférieur à 150 µm. Avantageusement, sa présence n'affecte pas substantiellement les propriétés mécaniques du bloc.

La fibre optique 12 s'étend entre une extrémité proximale 12ₚ et une extrémité distale 12_{d}. L'extrémité proximale 12ₚ, ou « entrée » de la fibre optique 12, est connectée à l'interrogateur 14.

L'extrémité distale 12_{d} est de préférence à l'intérieur du bloc 10. En particulier, elle est de préférence à moins de 10 cm, moins de 5 cm, moins de 2 cm, moins de 1 de cm de la face chaude 16_{c}.

Du côté de l'extrémité proximale 12ₚ, la fibre optique 12 sort du bloc 10, de préférence par la face froide 12_{f}, par une ouverture 18.

Dans un mode de réalisation préféré, la portion de la fibre optique 12 qui s'étend à l'intérieur du bloc 10, ou « partie de mesure 20 », s'étend de manière rectiligne, de préférence parallèlement à la direction de l'épaisseur du bloc, comme représenté.

Ce mode de réalisation n'est cependant pas limitatif. La partie de mesure peut s'étendre, par exemple, sensiblement parallèlement à la face chaude. Cependant, comme on le verra plus en détail dans la partie de la description relative à l'application à une sole de four, l'usure locale du bloc ne peut alors plus être mesurée quand le capteur disposé à cet emplacement est hors d'usage.

La partie de mesure comporte un, de préférence plusieurs capteurs 22ᵢ. La distance entre deux capteurs 22ᵢ successifs, le long de la fibre optique 12, peut être constante ou variable. Elle est de préférence inférieure à 10 cm, 5 cm, 3 cm, ou 1 cm. La précision de l'information fournie par l'interrogateur en est améliorée.

De préférence, un capteur, de préférence chaque capteur est une modification locale de la structure de la fibre optique, qui réfléchit au moins une partie du signal qu'elle reçoit de l'interrogateur.

Dans un mode de réalisation, la fibre optique ne comporte qu'un capteur, qui réfléchit au moins une partie du signal d'interrogation I.

Dans un mode de réalisation, la fibre optique comporte plusieurs capteurs, qui réfléchissent chacun une partie du signal d'interrogation I et laissent passer une autre partie pour qu'elle puisse atteindre le ou les autres capteurs disposés en aval. Chaque capteur opérationnel répond ainsi au signal d'interrogation, ce qui permet, avec une seule fibre optique, d'obtenir des informations en provenance de différentes régions du bloc, et en particulier à différentes profondeurs. En effet, si un capteur ne répond pas, l'interrogateur peut en conclure que ce capteur a été détruit du fait d'une exposition plus sévère à la température, et donc conclure que l'épaisseur résiduelle entre le capteur et la face chaude a été réduite.

Si les capteurs s'étendent parallèlement à la face chaude, il est ainsi possible de détecter une usure en différentes régions de la face chaude.

Si les capteurs s'étendent perpendiculairement à la face chaude, il est possible de mesurer un niveau d'usure en identifiant les capteurs qui sont encore en service, c'est-à-dire qui n'ont pas été détruits par une température excessive.

Pour déterminer l'origine d'un signal de réponse, l'interrogateur peut utiliser la différence entre l'instant auquel le signal d'interrogation a été émis et l'instant auquel le signal de réponse a été reçu.

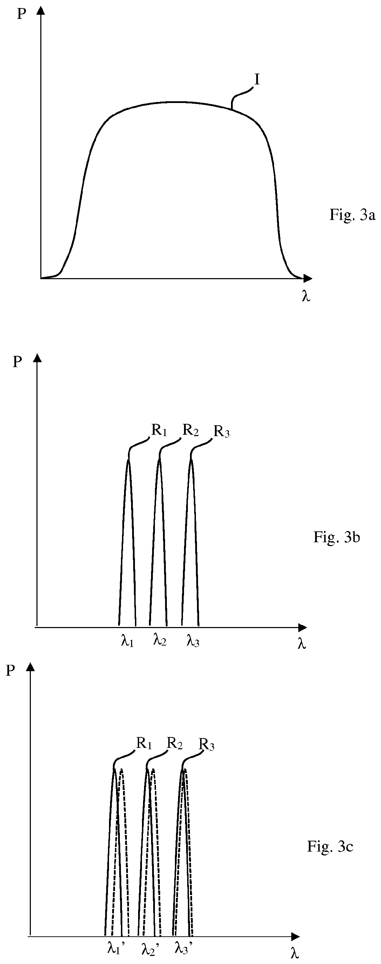

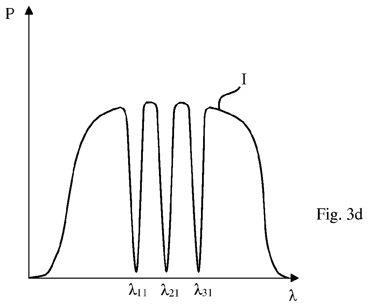

Comme illustré sur la figure 3, chaque capteur peut également réfléchir une partie seulement du spectre de fréquences (fréquences λ sur la figure 3a) du signal d'interrogation I injecté par l'interrogateur 14 (sur les figures 3a, 3b et 3c, « P » désigne la puissance des signaux). La seule analyse des fréquences des signaux reçus permet ainsi de déterminer l'origine des signaux de réponse. Sur la figure 3b, chaque capteur 22ᵢ a ainsi renvoyé un spectre de fréquences centré sur une fréquence λᵢ qui lui est spécifique. La présence d'un pic centré sur la fréquence λᵢ permet ainsi à l'interrogateur de déduire la présence du capteur 22ᵢ.

Un capteur peut être utilisé pour renvoyer une réponse binaire, en particulier pour indiquer qu'il est en service ou hors service. Il agit alors comme un détecteur.

Un capteur peut être utilisé pour renvoyer un signal de réponse modifié en fonction de la température. Il agit alors comme un capteur de mesure.

Un capteur 22ᵢ, préférence chaque capteur 22ᵢ, est un réseau de Bragg.

Les fibres optiques à réseaux de Bragg sont connues dans d'autres applications que les fours de verrerie.

En réponse à un signal d'interrogation I injecté par l'interrogateur 14 par l'extrémité proximale de la fibre optique, chaque réseau de Bragg 22ᵢ renvoie un signal de réponse Rᵢ qui lui est spécifique. Avantageusement, un réseau de Bragg peut donc servir de moyen de détection de l'occurrence d'une situation dans laquelle le réseau de Bragg est soumis à une température dépassant une valeur de seuil provoquant sa destruction, agissant ainsi comme un détecteur. Une pluralité de réseaux de Bragg d'une fibre optique orientée pour s'écarter de la face chaude d'une partie réfractaire permet donc de mesurer, par palier, l'usure de cette partie réfractaire.

Un réseau de Bragg présente en outre l'avantage d'envoyer un signal de réponse qui dépend de la température à laquelle il est soumis. Plus précisément, chaque réseau de Bragg agit comme un réflecteur optique à une longueur d'onde qui lui est spécifique. L'échauffement du réseau de Bragg provoque cependant une modification de cette longueur d'onde. Bien entendu, les longueurs d'ondes spécifiques aux différents réseaux de Bragg sont déterminées de manière à éviter toute ambiguïté sur l'origine d'un signal de réponse. Après avoir identifié cette origine, l'interrogateur peut déterminer la modification de la longueur d'onde, ou de manière équivalente la modification de la fréquence, pour déterminer la température du réseau de Bragg concerné ou une évolution fine de cette température.

La figure 3c illustre le cas particulier dans lequel les capteurs sont des réseaux de Bragg. En réponse au signal d'interrogation, les capteurs 22ᵢ peuvent renvoyer des signaux de réponse centrés sur les fréquences λᵢ à température ambiante (figure 2b) et sur des fréquences λᵢ' décalées par rapport aux fréquences λᵢ, respectivement, le décalage étant fonction de la température du capteur 22ᵢ. Sur la figure 3c, les pics centrés sur les fréquences λᵢ sont en traits interrompus et les pics centrés sur les fréquences λᵢ' sont en traits pleins.

Avantageusement, la mesure de température au moyen de réseaux de Bragg est insensible aux perturbations électromagnétiques.

Un réseau de Bragg peut donc non seulement servir de détecteur, pour déterminer si une température a dépassé une valeur de seuil, mais également comme moyen de mesure de la température locale ou de l'évolution de cette température.

L'interrogateur 14 est de préférence disposé à distance de la face chaude de la partie réfractaire, de préférence encore à distance de la face froide de la partie réfractaire. Il peut être en particulier disposé contre la face froide de la partie réfractaire.

Dans un mode de réalisation, l'interrogateur est à l'extérieur d'une couche isolante qui s'étend contre la face froide de la partie réfractaire. Avantageusement, l'interrogateur est ainsi bien protégé des températures élevées.

L'interrogateur 14 est un appareil électronique qui comporte classiquement un émetteur/récepteur 26 et un module de commande 28.

L'émetteur-récepteur 26 est adapté pour émettre, en entrée de la fibre optique 12, un signal d'interrogation I, par exemple un signal lumineux, et pour recevoir le ou les signaux de réponse Rᵢ reçus du ou des capteurs 22ᵢ.

Le module de commande 28 comporte classiquement un processeur et une mémoire dans laquelle est chargé un programme d'ordinateur. Grâce à ce programme d'ordinateur, le processeur peut commander l'émission du signal d'interrogation et analyser les signaux reçus afin d'identifier les capteurs qui ont répondu.

De préférence, le programme d'ordinateur permet également, notamment lorsque les capteurs sont des réseaux de Bragg, de mesurer un décalage de fréquence résultant de la température locale d'un réseau de Bragg, et donc d'évaluer une température et/ou une évolution d'une température par rapport à des mesures précédentes.

### Fabrication

La fibre optique est insérée, après fabrication du bloc, dans un logement ménagé lors de la fabrication de la partie réfractaire, et en particulier du bloc.

Le logement présente de préférence une forme tubulaire.

Le logement, rectiligne ou non, borgne ou traversant, présente de préférence un diamètre intérieur sensiblement identique à celui de la fibre optique, mais légèrement supérieur afin d'autoriser l'introduction de la fibre optique.

De préférence, la différence entre le diamètre extérieur du logement et le diamètre de la fibre optique est inférieur à 20%, de préférence inférieur à 10% du diamètre de la fibre optique.

Dans un mode de réalisation, le logement, de préférence borgne, est configuré pour ne pas traverser la partie réfractaire selon l'épaisseur. Après introduction dans le logement, l'extrémité distale 12_{d} n'atteint donc pas la face chaude 16_{c}.

Dans un autre mode de réalisation, le logement traverse la partie réfractaire de manière à s'étendre entre deux faces, de préférence entre la face chaude et la face froide.

Suivant l'invention, le logement est ménagé suivant un procédé comportant les étapes suivantes :
A) disposition, à l'intérieur d'un moule, d'une pièce temporaire configurée pour, après fabrication de la partie réfractaire et extraction de la pièce temporaire, laisser place à un logement pour loger ladite partie de mesure du guide d'ondes ;
B) préparation d'une charge de départ et introduction de ladite charge de départ dans le moule, de manière qu'elle noie ladite pièce temporaire, respectivement, de manière à obtenir une préforme ;
C) durcissement de ladite préforme de manière à former la partie réfractaire ;
D) extraction de la pièce temporaire de manière à ménager ledit logement dans la partie réfractaire ;
E) assemblage de la partie réfractaire avec les autres éléments constitutifs du four et, avant ou après ledit assemblage, introduction de la partie de mesure dans le logement et connexion de l'interrogateur à l'entrée du guide d'ondes.

Le moule peut être un moule de fabrication d'un bloc, par exemple d'un bloc de plus de 1 kg et/ou de moins de 50 kg. De préférence, la partie de mesure est alors introduite dans le logement après assemblage, au moins partiel, de la partie du four comportant le bloc, par exemple après assemblage de la paroi latérale de la cuve du four.

Le moule peut être une région destinée à être comblée pour former une sole.

De préférence, la pièce temporaire prend la forme d'un fil.

Le logement peut être ménagé suivant un procédé comportant les étapes suivantes :
a') disposition d'un fil à l'intérieur d'un moule ;
b') formation de la partie réfractaire dans le moule ;
c') extraction du fil, ce qui laisse apparaître le logement.

Le fil peut s'étendre à travers le moule de manière à former, après avoir été extrait de la pièce réfractaire fabriquée, un trou borgne ou un trou traversant.

Le fil peut être par exemple en molybdène. De préférence, il est couvert d'un revêtement antiadhésif, par exemple du nitrure de bore hexagonal ou du graphite, qui facilite son extraction hors du bloc.

La partie réfractaire peut être en un matériau fondu ou fritté.

Avantageusement, lorsque la partie réfractaire est fondue, elle se rétracte lors de son refroidissement, ce qui facilite le décollement du fil.

Le fil peut être également « sacrificiel », c'est-à-dire en un matériau qui peut être détruit après fabrication du bloc, par exemple mécaniquement ou par attaque chimique.

### Fonctionnement

Le fonctionnement découle directement de la description qui précède.

Dans un premier mode de réalisation, les capteurs agissent comme détecteurs.

Comme représenté sur la figure 2a, chaque capteur 22ᵢ (l'indice « i » étant un numéro d'identification du capteur) est initialement (*t* = *t₀*) dans une position dans laquelle il peut supporter la température à laquelle il est soumis. En réponse à un signal d'interrogation I introduit par l'émetteur-récepteur 26 de l'interrogateur 14 en entrée de la fibre optique, il renvoie un signal de réponse Rᵢ, par exemple en réfléchissant une partie du signal d'interrogation.

L'émetteur-récepteur 26 reçoit ce signal de réponse et le transmet au module de commande 28.

Le modèle de commande 28 analyse les signaux reçus et, s'il détecte ledit signal de réponse, en déduit que le capteur 22ᵢ qui en est à l'origine est toujours opérationnel.

Le module de commande 28 émet alors un message M contenant l'information selon laquelle le capteur est opérationnel. Ce message peut être envoyé à un ordinateur central et/ou être présenté à un opérateur, par exemple sur un écran et/ou par activation d'une lumière et/ou par l'émission d'un signal sonore.

Sous l'effet de la corrosion, l'épaisseur du bloc se réduit, jusqu'à atteindre l'épaisseur *e₁* à l'instant t = t₁ (figure 2b). On considère que le capteur 22₁ est le capteur le plus proche du verre en fusion V. A l'instant t₁, l'épaisseur de matière du bloc qui sépare le capteur 22₁ du verre V en fusion est réduite, de sorte que le capteur 22₁ est soumis à une température qui provoque sa destruction.

Le module de commande 28 constate, en réponse à l'émission d'un signal d'interrogation, l'absence de signal de réponse R₁ par le capteur 22₁. Il peut alors en déduire que ce capteur a été détruit, et donc, indirectement, que l'épaisseur de matière du bloc qui le séparait de l'intérieur de la cuve a été réduite.

Il peut alors émettre un message M correspondant, à destination de l'ordinateur central et/ou d'un opérateur, ou ne pas émettre de message.

L'instant t₁ de destruction du capteur 22₁ dépend de la nature de ce capteur. Dans un mode de réalisation, comme représenté sur la figure 2b, le capteur est détruit avant d'être exposé au verre en fusion. Dans un autre mode de réalisation, le capteur reste opérationnel jusqu'à ce qu'il soit exposé à l'intérieur de la cuve, et en particulier jusqu'à ce qu'il entre en contact avec du verre en fusion.

Dans un mode de réalisation préféré, comme représenté, la partie de mesure 20 de la fibre optique incorpore plusieurs capteurs 22ᵢ. Les capteurs qui n'ont pas été détruits renvoient un signal de réponse respectif en réaction à l'émission du signal d'interrogation I. Le module de commande analyse l'ensemble des signaux de réponse Rᵢ reçus, identifie les capteurs 22ᵢ à l'origine de ces signaux de réponse, détecte les capteurs qui n'ont pas répondu, et en déduit donc un état de corrosion du bloc, c'est-à-dire évalue l'ampleur de la diminution de l'épaisseur.

Le module de commande peut en particulier évaluer l'épaisseur du bloc qui a été éliminée depuis l'instant initial t₀. Il peut également mesurer la vitesse à laquelle le bloc est usé, à partir des instants *tᵢ* auxquels les capteurs 22ᵢ n'ont plus répondu au signal d'interrogation I.

Dans un mode de réalisation préféré, au moins une partie des capteurs, de préférence chaque capteur 22ᵢ est un capteur de mesure, capable de fournir, dans le signal de réponse qu'il renvoie, une indication quantitative sur la température qu'il subit. En particulier, les capteurs peuvent être des réseaux de Bragg. A mesure que la corrosion agit pour réduire l'épaisseur du bloc, la fréquence du signal de réponse renvoyé par un capteur évolue. Cette évolution permet avantageusement de déterminer l'évolution locale de la température.

### Guide d'ondes disposé entre deux blocs

La fibre optique n'est pas nécessairement intégrée dans le bloc, mais peut être également intégrée entre deux blocs adjacents. De préférence, elle est logée dans une rainure ménagée à la surface du bloc, de manière à ne pas faire saillie. De préférence encore, elle est immobilisée dans la rainure, de préférence avec un ciment réfractaire, de préférence par des plots de ciment, de manière à accommoder les variations dilatométriques des blocs entre lesquels elle s'étend.

### Guide d'ondes dans la sole

Les caractéristiques décrites ci-dessus pour un bloc réfractaire sont applicables à une sole 30. Réciproquement, les caractéristiques décrites ci-dessous pour une sole sont applicables à un bloc réfractaire.

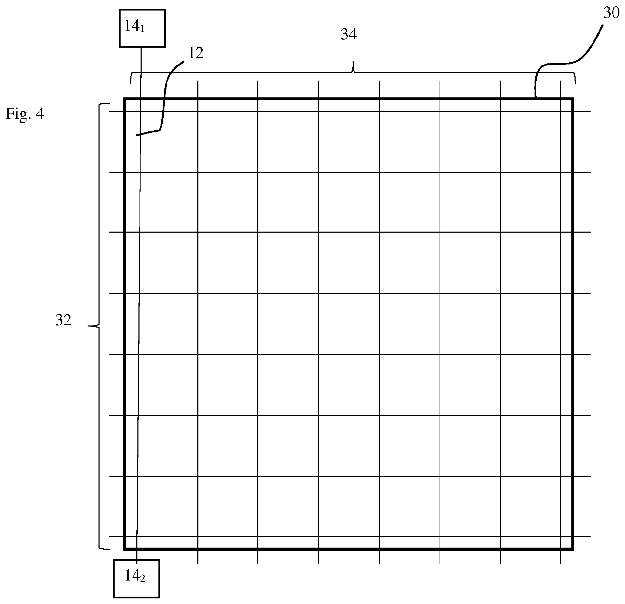

En particulier lorsque la partie réfractaire est une sole, le guide d'ondes, de préférence une fibre optique, peut s'étendre sensiblement parallèlement à la face chaude, c'est-à-dire à la face de la sole qui est en contact avec du verre en fusion (figures 4 à 7).

De préférence, on dispose d'un réseau de fibres optiques dans la sole, de préférence sous la forme d'un ou plusieurs ensembles de fibres parallèles, par exemple sous la forme de deux ensembles 32 et 34 dont les parties de mesure sont orientées à angle droit, vu de dessus, comme représenté sur la figure 4.

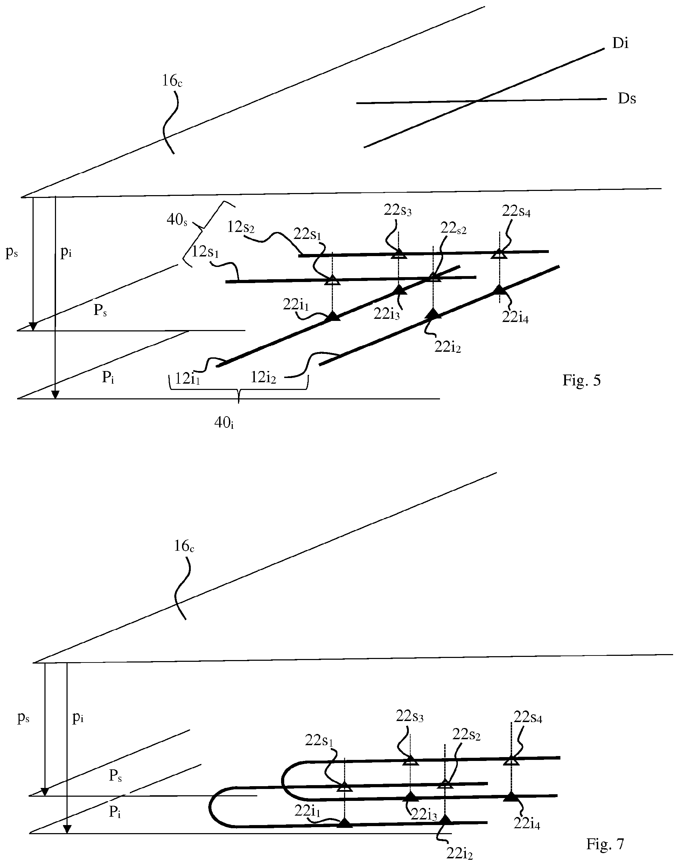

Toutes les fibres optiques peuvent s'étendre dans un même plan. Alternativement, des fibres optiques peuvent être disposées à différentes profondeurs dans la sole, en particulier sous la forme de nappes de fibres optiques superposées (figures 5 à 7).

De préférence, la densité de capteurs est supérieure à 3, de préférence supérieure à 10, de préférence supérieure à 50, de préférence supérieure à 100 capteurs par m² de face chaude de la sole.

De préférence, des premier et deuxième interrogateurs 14₁ et 14₂ sont disposés à l'entrée et à la sortie de chaque fibre, c'est-à-dire à leur extrémité proximale 12ₚ et distale 12_{d}, respectivement. Dans un souci de clarté, seuls les premier et deuxième interrogateurs 14₁ et 14₂ de la première fibre 12 ont été représentés sur la figure 4.

Le deuxième interrogateur reçoit donc les parties du signal d'interrogation I injecté par le premier interrogateur et qui n'ont pas été réfléchies par les différents capteurs de la fibre optique. Par exemple, si la fibre optique ne comporte que trois capteurs et si le signal d'interrogation et les signaux de réponse sont ceux des figures 3a et 3b, le deuxième interrogateur reçoit un signal similaire à celui représenté sur la figure 3d.

Les deux interrogateurs disposent donc d'un signal permettant d'identifier les capteurs ayant répondu et, si les capteurs sont des capteurs de mesure, par exemple des réseaux de Bragg, permettant d'évaluer la température ou l'évolution de la température pour chaque capteur.

De préférence, le deuxième interrogateur peut également envoyer un signal d'interrogation. La présence de deux interrogateurs permet avantageusement, en cas de rupture de la fibre optique, d'obtenir des informations relatives aux capteurs de chaque côté de la zone de rupture. Elle améliore donc la robustesse du dispositif.

Le fonctionnement est similaire à celui décrit pour l'application à un bloc réfractaire.

Dans un mode de réalisation, les capteurs agissent comme détecteurs et en réponse à un signal d'interrogation I introduit par le premier interrogateur 14₁ en entrée de la fibre optique, renvoient chacun un signal de réponse respectif. Sous l'effet de la corrosion de la sole, ou de l'apparition d'une fissure, l'épaisseur de la sole peut se réduire à proximité d'un capteur, ce qui augmente la température à laquelle est soumise le capteur, jusqu'à une valeur provoquant sa mise hors service. Le premier interrogateur et/ou le deuxième interrogateur constatent, en réponse à l'émission d'un signal d'interrogation, l'absence d'une signature du capteur dans le signal qu'ils reçoivent. Ils peuvent alors en déduire que ce capteur a été détruit, et donc, indirectement, que l'épaisseur de matière de la sole du bloc qui le séparait de l'intérieur de la cuve a été réduite. Ils peuvent alors émettre un message correspondant, à destination de l'ordinateur central et/ou d'un opérateur.

Si la température a endommagé la fibre optique de sorte que le signal provenant du premier interrogateur ne peut aller au-delà du capteur, par exemple parce que la fibre a été coupée, le premier interrogateur ne reçoit plus aucune information des capteurs en aval du capteur endommagé, c'est-à-dire situés entre ce dernier et le deuxième interrogateur.

Le deuxième interrogateur peut alors interroger ces capteurs en aval, en injectant un signal d'interrogation et en analysant le signal renvoyé par ces capteurs en aval. Le premier interrogateur peut continuer à interroger les capteurs en amont, en injectant un signal d'interrogation et en analysant le signal renvoyé par ces capteurs en amont. La destruction d'un capteur a donc un effet limité sur le fonctionnement de la fibre optique.

Dans un mode de réalisation préféré, au moins une partie des capteurs, de préférence chaque capteur est un capteur de mesure, capable de fournir, dans le signal de réponse qu'il renvoie, une indication quantitative sur la température qu'il subit. En particulier, les capteurs peuvent être des réseaux de Bragg. A mesure que l'épaisseur de la sole se réduit, la fréquence du signal de réponse renvoyé par un capteur évolue. Cette évolution permet avantageusement de déterminer l'évolution locale de la température. Avantageusement, il est ainsi notamment possible de détecter une évolution anormale de la température d'un capteur, et d'intervenir avant sa destruction.

Dans un mode de réalisation, au moins deux fibres optiques, ou de manière équivalente, deux morceaux de fibre optique, se croisent à des profondeurs différentes, la profondeur étant mesurée à partir de la face chaude, perpendiculairement à la face chaude.

Comme représenté sur la figure 5, des capteurs supérieurs 22sᵢ et inférieurs 22iᵢ de fibres optiques supérieure 12s et inférieure 12i, respectivement, peuvent être superposés suivant la direction de l'épaisseur de la sole, la fibre inférieure étant une fibre optique plus éloignée de la face chaude que la fibre optique supérieure.

Après destruction du capteur supérieur, il est ainsi possible d'obtenir des informations de la température locale avec le capteur inférieur.

Sur la figure 5, des nappes supérieure 40s et inférieure 40i comportant des fibres optiques supérieures 12sⱼ et inférieure 12i_{j'}, les indices j et j' désignant un numéro de fibre optique dans les nappes supérieure 40s et inférieure 40i, respectivement. Les fibres optiques supérieures 12sⱼ et inférieure 12i_{j'} s'étendent dans des plans supérieur Pₛ et inférieur Pᵢ, respectivement, parallèles à la face chaude 16_{c} de la sole, à des profondeurs pₛ et pᵢ, respectivement.

Dans un mode de réalisation, les fibres optiques supérieures 12sⱼ sont parallèles les unes aux autres, suivant une direction supérieure Ds.

Dans un mode de réalisation, les fibres optiques inférieures 12iⱼ, sont parallèles les unes aux autres, suivant une direction inférieure Di.

Les directions supérieure et inférieure peuvent être perpendiculaires l'une à l'autre. Vues de dessus, les fibres optiques supérieures 12sⱼ et inférieure 12i_{j'} forment ainsi un maillage de mailles carrées, comme représenté sur la figure 4, ou rectangulaires. On appelle « capteurs supérieurs » 22sᵢ les capteurs qui sont intégrés dans une fibre supérieure, et « capteurs inférieurs » 22i_{i'} les capteurs qui sont intégrés dans une fibre inférieure.

A chaque croisement, vu de dessus, entre une fibre optique supérieure et une fibre optique inférieure, un capteur supérieur (triangle non rempli sur la figure 5) est disposé sur la fibre optique supérieure et un capteur inférieur (triangle plein sur la figure 5) est disposé sur une fibre optique inférieure. A chaque croisement, plusieurs capteurs sont ainsi alignés, suivant une direction sensiblement perpendiculaire à la face chaude, c'est-à-dire sensiblement verticale (traits pointillés).

Le fonctionnement du mode de réalisation de la figure 5 est similaire à celui du mode de réalisation dans lequel la fibre optique comporte plusieurs capteurs et s'étend perpendiculairement à la face chaude. Il est cependant nécessaire d'utiliser des signaux réfléchis par plusieurs fibres optiques.

Dans un mode de réalisation, les capteurs agissent comme détecteurs et chaque capteur est initialement dans une position dans laquelle il peut supporter la température à laquelle il est soumis. En réponse à un signal d'interrogation introduit par un interrogateur en entrée de la fibre optique qui contient un capteur, ce capteur renvoie un signal de réponse, par exemple en réfléchissant une partie du signal d'interrogation. L'interrogateur analyse les signaux reçus, et s'il détecte ledit signal de réponse, en déduit que le capteur qui en est à l'origine est toujours opérationnel.

Sous l'effet de l'usure, l'épaisseur de la sole se réduit, jusqu'à atteindre une épaisseur qui met hors service le capteur. L'interrogateur peut en déduire que l'épaisseur de matière de la sole qui le séparait de l'intérieur de la cuve a été réduite.

Les capteurs qui sont en-dessous du capteur rendu hors service sont cependant encore en fonctionnement et renvoient des signaux de réponse à l'interrogateur qui les interroge.

L'usure de la sole peut se poursuivre. Les capteurs superposés sont mis progressivement hors service, à mesure que l'usure s'accentue. L'identité des capteurs superposés étant connue, il est ainsi avantageusement possible d'évaluer l'ampleur de la diminution de l'épaisseur de la sole en chaque point de la face chaude en dessous duquel sont superposés plusieurs capteurs. A cet effet, un ordinateur central peut collecter les messages des différents interrogateurs et, connaissant la distribution spatiale des capteurs, en déduire un profil de l'usure de la sole.

Dans un mode de réalisation préféré, au moins une partie des capteurs, de préférence chaque capteur est un capteur de mesure, capable de fournir, dans le signal de réponse qu'il renvoie, une indication quantitative sur la température qu'il subit. En particulier, les capteurs peuvent être des réseaux de Bragg. A mesure que la corrosion agit pour réduire l'épaisseur de la sole, la fréquence du signal de réponse renvoyé par un capteur évolue.

Cette évolution permet avantageusement de déterminer avec précision l'évolution locale de la température.

Le nombre de nappes n'est pas limitatif. De préférence, la densité de nappes est supérieure à 1, de préférence supérieure à 2, de préférence supérieure à 3 nappes par 10 cm d'épaisseur de la sole.

Les fibres supérieures peuvent former un angle quelconque avec les fibres inférieures.

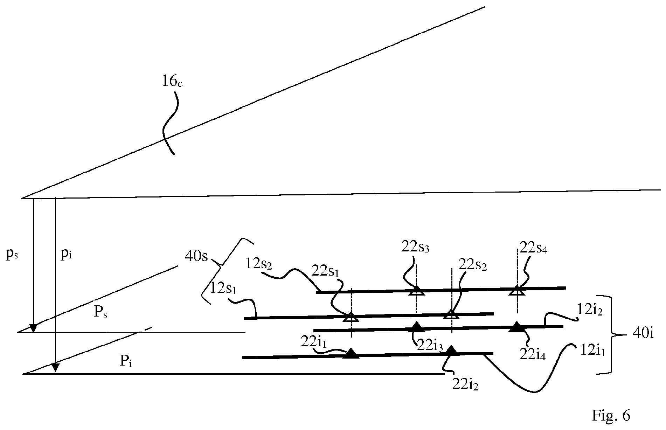

Par exemple, sur la figure 6, toutes les fibres sont orientées parallèlement les unes aux autres.

Des capteurs superposés peuvent appartenir à une même fibre optique, repliée sur elle-même, comme sur la figure 7. Ce sont alors des morceaux d'une même fibre optique qui peuvent être à des profondeurs différentes.

Les modes de réalisation décrits pour une sole sont applicables à d'autres parties du four, et en particulier à une paroi latérale de la cuve du four.

Comme cela apparaît clairement à présent, l'invention fournit une solution permettant d'évaluer, de manière plus précise et en temps réel, l'épaisseur résiduelle d'une partie réfractaire d'un four de verrerie.

Bien entendu, l'invention n'est pas limitée aux modes de réalisation décrits et représentés, fournis à des fins illustratives seulement.

En particulier, l'invention n'est pas limitée à une fibre optique comme guide d'ondes. Une fibre optique en verre est préférée, car elle exclut le risque de contamination du verre en fusion. D'autres guides d'ondes pourraient cependant être envisagés. De préférence, le guide d'ondes présente cependant la forme d'une fibre présentant de préférence un diamètre inférieur à 200 micromètres.

Toutes les caractéristiques applicables à une fibre optique et décrites dans la présente description sont applicables à un autre type de guide d'ondes.

Toutes les caractéristiques applicables à un bloc réfractaire et décrites dans la présente description sont applicables à un autre type de partie réfractaire.

Le nombre de guides d'ondes dans une partie réfractaire, leur agencement, le nombre de guides d'ondes connectés à un interrogateur et la forme de la partie réfractaire ne sont pas limitatifs.

La face chaude du bloc n'est pas nécessairement entièrement en contact avec le bain de verre en fusion. Elle peut même ne pas être en contact avec le verre en fusion, mais être seulement exposée à l'environnement gazeux au-dessus de ce bain.

L'invention n'est pas non plus limitée à la seule cuve du four de verrerie. La partie réfractaire pourrait être par exemple un bloc d'un feeder, une pièce de superstructure (pièce à nez, bloc de voûte, ...), une pièce de formage (lip, ...) ou un bloc de gorge.

## Revendications

1. Procédé de fabrication d'un four de verrerie, comportant :
- une partie réfractaire (10) présentant une face chaude qui est exposée à un espace du four contenant, en service, du verre en fusion ou destinée à contenir du verre en fusion ;
- un guide d'ondes (12) comportant une partie de mesure (20) s'étendant dans la partie réfractaire ;
- un interrogateur (14) connecté à une entrée (12ₚ) du guide d'ondes et configuré pour injecter un signal d'interrogation (I) dans ladite entrée ;
la partie de mesure du guide d'ondes incorporant au moins un capteur (22ᵢ) configuré pour envoyer à l'interrogateur un signal de réponse (Rᵢ) en réponse à l'injection dudit signal d'interrogation,
l'interrogateur étant configuré pour analyser ledit signal de réponse, déterminer, en fonction de l'analyse dudit signal de réponse ou, si le guide d'ondes comporte plusieurs dits capteurs, des signaux de réponse envoyés par lesdits capteurs, un niveau d'usure et/ou une vitesse d'usure de la partie réfractaire, et émettre un message (M) en fonction de ladite analyse,
ledit procédé comportant les étapes suivantes :
A) disposition, à l'intérieur d'un moule, d'une pièce temporaire configurée pour, après fabrication de la partie réfractaire et extraction de la pièce temporaire, laisser place à un logement pour loger ladite partie de mesure du guide d'ondes ;
B) préparation d'une charge de départ et introduction de ladite charge de départ dans le moule, de manière qu'elle noie ladite pièce temporaire, respectivement, de manière à obtenir une préforme ;
C) durcissement de ladite préforme de manière à former la partie réfractaire ;
D) extraction de la pièce temporaire de manière à ménager ledit logement ;
E) assemblage de la partie réfractaire avec d'autres éléments constitutifs du four et, avant ou après ledit assemblage, introduction de la partie de mesure dans le logement et connexion de l'interrogateur à l'entrée (12ₚ) du guide d'ondes.
procédé dans lequel, à l'étape C),
- la préforme est frittée à une température comprise entre 400°C et 1200°C, ou dans lequel
- la charge de départ est un bain de matière en fusion, le durcissement à l'étape C) résultant du refroidissement de ladite charge de départ, ou dans lequel
- le durcissement résulte d'une prise en masse obtenue au moyen d'un liant.

2. Procédé selon la revendication précédente, dans lequel la pièce temporaire comprend un fil en molybdène.

3. Procédé selon l'une quelconque des revendications précédentes, dans lequel le logement est configuré pour ne pas traverser la partie réfractaire selon l'épaisseur.

4. Procédé selon l'une quelconque des revendications précédentes, dans lequel le guide d'ondes est une fibre optique, le capteur est un réseau de Bragg et la partie de mesure du guide d'ondes comporte plusieurs dits capteurs.

5. Procédé selon la revendication immédiatement précédente, dans lequel les capteurs sont disposés à intervalle régulier le long du guide d'ondes.

6. Procédé selon l'une quelconque des revendications précédentes, dans lequel la partie réfractaire est un bloc réfractaire ou une sole.

7. Procédé selon l'une quelconque des revendications précédentes, dans lequel l'extrémité distale (12_{d}) du guide d'ondes est à l'intérieur de la partie réfractaire, de préférence à moins de 10 cm, moins de 5 cm, moins de 2 cm, moins de 1 de cm de la face chaude de la partie réfractaire.

8. Procédé selon l'une quelconque des revendications précédentes, dans lequel la partie de mesure du guide d'ondes est orientée vers la face chaude de la partie réfractaire exposée à un espace du four contenant du verre en fusion.

9. Procédé selon la revendication immédiatement précédente, dans lequel la partie de mesure du guide d'ondes est orientée perpendiculairement à la face chaude.

10. Procédé selon l'une quelconque des revendications 1 à 7, dans lequel la partie de mesure du guide d'ondes est orientée parallèlement à la face chaude de la partie réfractaire exposée à un espace du four contenant du verre en fusion.

11. Procédé selon la revendication immédiatement précédente, comportant une nappe constituée d'un ensemble de parties de mesure de dits guides d'ondes s'étendant suivant une surface courbe ou plane, de préférence suivant un plan parallèle à la face chaude.

12. Procédé selon la revendication immédiatement précédente, dans lequel lesdites parties de mesure de la nappe s'étendent parallèlement les unes aux autres ou se croisent.

13. Procédé selon l'une quelconque des deux revendications immédiatement précédentes, comportant au moins des première et deuxième nappes et dans lequel les capteurs de la première nappe sont répartis suivant un premier motif, les capteurs de la deuxième nappe sont répartis suivant un deuxième motif et le premier motif et le deuxième motif sont identiques.

14. Procédé selon l'une quelconque des trois revendications immédiatement précédentes, comportant plus de 5 groupes de capteurs par m² de la face chaude, chaque groupe comportant au moins trois capteurs superposés suivant une direction de superposition qui n'est pas parallèle à la face chaude de la partie réfractaire, un capteur n'appartenant qu'à un seul groupe, les directions de superposition étant de préférence parallèles les unes aux autres.

## Patentansprüche

1. Verfahren zur Herstellung eines Glasschmelzofens, umfassend:
- einen feuerfesten Teil (10), der eine heiße Seite aufweist, die einem Bereich des Ofens ausgesetzt ist, der im Betrieb Glasschmelze enthält oder dazu bestimmt ist, Glasschmelze zu enthalten;
- einen Wellenleiter (12), der einen Messteil (20) umfasst, der sich in dem feuerfesten Teil erstreckt;
- eine Abfrageeinrichtung (14), die an einen Eingang (12ₚ) des Wellenleiters angeschlossen ist und dazu ausgestaltet ist, ein Abfragesignal (I) in den Eingang einzuleiten;
wobei der Messteil des Wellenleiters mindestens einen Sensor (22ᵢ) beinhaltet, der dazu ausgestaltet ist, an die Abfrageeinrichtung ein Antwortsignal (Rᵢ) als Antwort auf die Einleitung des Abfragesignals zu senden,
wobei die Abfrageeinrichtung dazu ausgestaltet ist, das Antwortsignal zu analysieren, in Abhängigkeit von der Analyse des Antwortsignals oder, falls der Wellenleiter mehrere solche Sensoren umfasst, der von den Sensoren gesendeten Antwortsignale einen Verschleißgrad und/oder eine Verschleißgeschwindigkeit des feuerfesten Teils zu ermitteln und in Abhängigkeit von der Analyse eine Meldung (M) auszugeben,
wobei das Verfahren die folgenden Schritte umfasst:
A) Anordnen, im Inneren einer Form, eines temporären Teils, das dazu ausgestaltet ist, nach Herstellung des feuerfesten Teils und Entnehmen des temporären Teils Platz für eine Aufnahme zum Aufnehmen des Messteils des Wellenleiters zu lassen;
B) Vorbereiten einer Ausgangscharge und Einführen der Ausgangscharge in die Form, so dass sie das temporäre Teil versenkt bzw. so, dass ein Rohling erhalten wird;
C) Aushärten des Rohlings, so dass der feuerfeste Teil gebildet wird;
D) Entnehmen des temporären Teils, so dass die Aufnahme ausgebildet wird;
E) Zusammenfügen des feuerfesten Teils mit anderen Bestandteilen des Ofens und, vor oder nach dem Zusammenfügen, Einführen des Messteils in die Aufnahme und Anschließen der Abfrageeinrichtung an den Eingang (12ₚ) des Wellenleiters.
Verfahren, bei dem, im Schritt C),
- der Rohling bei einer Temperatur zwischen 400 °C und 1200 °C gesintert wird, oder bei dem
- die Ausgangscharge ein Schmelzebad ist, wobei das Aushärten im Schritt C) aus dem Kühlen der Ausgangscharge resultiert, oder bei dem
- das Aushärten aus einem mittels eines Bindemittels erhaltenen Abbinden resultiert.

2. Verfahren nach dem vorhergehenden Anspruch, wobei das temporäre Teil einen Molybdändraht beinhaltet.

3. Verfahren nach einem der vorhergehenden Ansprüche, wobei die Aufnahme dazu ausgestaltet ist, den feuerfesten Teil entlang der Dicke nicht zu durchdringen.

4. Verfahren nach einem der vorhergehenden Ansprüche, wobei der Wellenleiter eine Glasfaser ist, der Sensor ein Bragg-Gitter ist und der Messteil des Wellenleiters mehrere solche Sensoren umfasst.

5. Verfahren nach dem unmittelbar vorhergehenden Anspruch, wobei die Sensoren entlang des Wellenleiters in regelmäßigem Abstand angeordnet sind.

6. Verfahren nach einem der vorhergehenden Ansprüche, wobei der feuerfeste Teil ein feuerfester Block oder ein Wannenboden ist.

7. Verfahren nach einem der vorhergehenden Ansprüche, wobei das distale Ende (12_{d}) des Wellenleiters im Inneren des feuerfesten Teils ist, bevorzugt weniger als 10 cm, weniger als 5 cm, weniger als 2 cm, weniger als 1 cm von der heißen Seite des feuerfesten Teils entfernt.

8. Verfahren nach einem der vorhergehenden Ansprüche, wobei der Messteil des Wellenleiters zu der heißen Seite des feuerfesten Teils hin ausgerichtet ist, die einem Bereich des Ofens ausgesetzt ist, der Glasschmelze enthält.

9. Verfahren nach dem unmittelbar vorhergehenden Anspruch, wobei der Messteil des Wellenleiters senkrecht zu der heißen Seite ausgerichtet ist.

10. Verfahren nach einem der Ansprüche 1 bis 7, wobei der Messteil des Wellenleiters parallel zu der heißen Seite des feuerfesten Teils ausgerichtet ist, die einem Bereich des Ofens ausgesetzt ist, der Glasschmelze enthält.

11. Verfahren nach dem unmittelbar vorhergehenden Anspruch, umfassend eine Lage, die aus einer Anordnung von Messteilen aus solchen Wellenleitern besteht, die sich entlang einer gewölbten oder planen Fläche erstreckt, bevorzugt entlang einer zu der heißen Seite parallelen Ebene.

12. Verfahren nach dem unmittelbar vorhergehenden Anspruch, wobei die Messteile der Lage sich parallel zueinander erstrecken oder sich kreuzen.

13. Verfahren nach einem der beiden unmittelbar vorhergehenden Ansprüche, das mindestens erste und zweite Lagen umfasst und bei dem die Sensoren der ersten Lage gemäß einem ersten Muster verteilt sind, die Sensoren der zweiten Lage gemäß einem zweiten Muster verteilt sind und das erste Muster und das zweite Muster identisch sind.

14. Verfahren nach einem der drei unmittelbar vorhergehenden Ansprüche, das mehr als 5 Gruppen von Sensoren je m² der heißen Seite umfasst, wobei jede Gruppe mindestens drei Sensoren umfasst, die entlang einer Überlagerungsrichtung übereinander liegen, die nicht parallel zu der heißen Seite des feuerfesten Teils ist, wobei ein Sensor nur zu einer einzigen Gruppe gehört, wobei die Überlagerungsrichtungen bevorzugt parallel zueinander sind.

## Claims

1. Method for producing a glass furnace, comprising:
- a refractory portion (10) having a hot face which is exposed to a space of the furnace containing, in use, molten glass or intended to contain molten glass;
- a waveguide (12) comprising a measurement portion (20) extending into the refractory portion;
- an interrogator (14) connected to an input (12ₚ) of the waveguide and configured to inject an interrogation signal (I) into said input;
the measurement portion of the waveguide incorporating at least one sensor (22ᵢ) configured to send a response signal (Rᵢ) to the interrogator in response to the injection of said interrogation signal,
the interrogator being configured to analyse said response signal, to determine, according to the analysis of said response signal or, if the waveguide comprises a plurality of said sensors, of the response signals sent by said sensors, a level of wear and/or a rate of wear of the refractory portion, and to send a message (M) according to said analysis,
said method comprising the following steps:
A) arranging, inside a mould, a temporary part configured to, after production of the refractory portion and removal of the temporary part, leave space for a compartment for accommodating said measurement portion of the waveguide;
B) preparing a starting feedstock and introducing said starting feedstock into the mould, such that said temporary part is embedded therein, respectively, so as to obtain a preform;
C) hardening said preform so as to form the refractory portion;
D) removing the temporary part so as to make said compartment;
E) assembling the refractory portion with other constituent elements of the furnace and, before or after said assembly, introducing the measurement portion into the compartment and connecting the interrogator to the input (12ₚ) of the waveguide;
in which method, in step C),
- the preform is sintered at a temperature of between 400°C and 1200°C, or in which
- the starting feedstock is a bath of molten material, the hardening in step C) resulting from the cooling of said starting feedstock, or in which
- the hardening results from solidification obtained by means of a binder.

2. Method according to the preceding claim, wherein the temporary part comprises a wire made of molybdenum.

3. Method according to either one of the preceding claims, wherein the compartment is configured not to pass through the refractory portion in the direction of its thickness.

4. Method according to any one of the preceding claims, wherein the waveguide is an optical fibre, the sensor is a Bragg grating and the measurement portion of the waveguide comprises a plurality of said sensors.

5. Method according to the immediately preceding claim, wherein the sensors are arranged at regular intervals along the waveguide.

6. Method according to any one of the preceding claims, wherein the refractory portion is a refractory block or a floor.

7. Method according to any one of the preceding claims, wherein the distal end (12_{d}) of the waveguide is inside the refractory portion, preferably less than 10 cm, less than 5 cm, less than 2 cm, less than 1 cm from the hot face of the refractory portion.

8. Method according to any one of the preceding claims, wherein the measurement portion of the waveguide is oriented towards the hot face of the refractory portion that is exposed to a space of the furnace containing molten glass.

9. Method according to the immediately preceding claim, wherein the measurement portion of the waveguide is oriented perpendicular to the hot face.

10. Method according to any one of Claims 1 to 7, wherein the measurement portion of the waveguide is oriented parallel to the hot face of the refractory portion that is exposed to a space of the furnace containing molten glass.

11. Method according to the immediately preceding claim, comprising a sheet consisting of a set of measurement portions of said waveguides extending along a curved or planar surface, preferably along a plane parallel to the hot face.

12. Method according to the immediately preceding claim, wherein said measurement portions of the sheet extend parallel to one another or intersect.

13. Method according to either one of the two immediately preceding claims, comprising at least first and second sheets and wherein the sensors of the first sheet are distributed in a first pattern, the sensors of the second sheet are distributed in a second pattern and the first pattern and the second pattern are identical.

14. Method according to any one of the three immediately preceding claims, comprising more than 5 groups of sensors per m² of the hot face, each group comprising at least three sensors superposed in a direction of superposition which is not parallel to the hot face of the refractory portion, a sensor belonging only to one group, the directions of superposition being preferably parallel to one another.
